# EUROPEAN PATENT APPLICATION

(11) **EP 3 242 496 A1**
(43) Date of publication of application: **08.11.2017**
(21) Application number: 16763712.3
(22) Date of filing: 04.07.2016
(51) Int. Cl.: H04W 4/02, H04M 1/725, H04W 64/00, G06F 3/01

(54) **MULTIMEDIA CONTROL METHOD AND APPARATUS**

(30) Priority: 21.03.2016 CN 201610161982
(71) Applicant: LE Holdings (Beijing) Co., Ltd., Beijing 100025 (CN); Le Shi Internet Information & Technology Corp., Beijing, Beijing 100025 (CN)
(72) Inventor: LI, Yin, Beijing 100025 (CN)
(74) Representative: Epping - Hermann - Fischer
(86) International application number: PCT/CN2016/088486
(87) International publication number: WO 2017/161742

(57) **Abstract**

The present disclosure provides a method and device for controlling multimedia, the method includes: configuring a target area and multimedia content to be played in the target area; detecting whether a current geographic location is located in the target area or not; controlling the multimedia device to be turned on, and controlling the multimedia device to start playing the multimedia content when the current geographic location is located in the target area; and controlling the multimedia device to be turned off when the current geographic location is located outside of the target area. The present disclosure may automatically start playing the multimedia content when a user reaches the target area or automatically stop playing the multimedia content, the control of playing the multimedia content may be achieved by the presetting of the user only. It is simple and convenient to operate, and may save the user's time and the energy.

## Description

### CROSS-REFERENCE TO RELATED APPLICATIONS

The application claims priority to the Chinese Patent Application No. 2016101619821 filed with the Patent Office of the People's Republic of China on March 21, 2016, entitled "METHOD AND DEVICE FOR CCONTROLLING MULTIMEDIA", the entire contents of all of which are incorporated herein by reference.

### TECHNICAL FIELD

The present disclosure relates to the technical field of computers, and more particularly to a method and device for controlling multimedia.

### BACKGROUND

The current user may kill the time by watching multimedia content on a journey or at a certain place in leisure time, for example, the user watches multimedia content on a journey from home to the company, watches multimedia content on a vehicle-mounted rear seat screen when taking a taxi, or watches a multimedia content when arriving at a certain specified WIFI hotspot and so on.

However, every time the user needs to click the screen manually so as to choose to start playing the multimedia content when wanting to watch the multimedia content, and needs to click the screen manually so as to stop playing the multimedia content when not wanting to watch the multimedia content. In this way, the operation process of the user is complicated and time-consuming. Moreover, under the condition that the multimedia content is played by the vehicle-mounted screen on the taxi, the screen is always in normally-on state because the operation which the driver needs to manually turn on or turn off the screen for each time is cumbersome, thereby the electric energy is consumed.

### SUMMARY

In order to overcome the problems in the related art, the present disclosure provides a method and device for controlling multimedia.

According to the first aspect of the embodiment of the present disclosure, the present disclosure provides a method for controlling multimedia, including:
configuring a target area and multimedia content to be played in the target area;
detecting whether a current geographic location is located in the target area or not;
controlling a multimedia device to be turned on, and controlling a multimedia device to start playing the multimedia content when the current geographic location is located in the target area; and
controlling the multimedia device to be turned off when the current geographic location is located outside of the target area.

According to the second aspect of the embodiment of the present disclosure, the present disclosure provides a device for controlling multimedia, including:
an obtaining module configured to configure the target area and multimedia content to be played in the target area;
a first detecting module configured to detect whether a current geographic location is located in the target area or not; and
a first controlling module configured to control the multimedia device to be turned on, and control the multimedia device to start playing the multimedia content when the current geographic location is located in the target area;
a second controlling module configured to control the multimedia device to be turned off when the current geographic location is located outside of the target area.

According to the third aspect of the embodiment of the present disclosure, the present disclosure provides a terminal, including a device for controlling multimedia provided by any one of items of the second aspect of the present disclosure.

The technical solutions provided by the embodiments of the present disclosure may include the following beneficial effects:
The present disclosure may detect whether a current geographic location is located in a target area or not through configuring the target area and multimedia content to be played in the target area, when the current geographic location is located in the target area, a multimedia device may be controlled to be turned on and may be controlled to start playing the multimedia content, and when the current geographic location is located outside of the target area, the multimedia device may be controlled to be turned off.

The present disclosure may automatically start playing the multimedia content when a user reaches the target area or automatically stop playing the multimedia content, the control of playing the multimedia content may be achieved by the presetting of the user only. It is simple and convenient to operate, and is capable of saving the time of the user and saving the energy.

It should be understood that the above general description and the detailed description below are merely exemplary and illustrative, and cannot limit the present disclosure.

### BRIEF DESCRIPTION OF THE DRAWINGS

The accompanying drawings, which are incorporated in the specification and constitute a part of the specification, illustrate some embodiments that conform to the disclosure, and serve to explain the principles of the disclosure together with the specification.

In order to more clearly illustrate the technical solutions of the embodiments of the present disclosure or of the prior art, the drawings needed to be used in the description of the embodiments or the prior art will be briefly introduced below. Apparently, those of ordinary skill in the art can also obtain other drawings according to these drawings without creative effort.
Figure 1 is a flow chart of a method for controlling multimedia illustrated according to an exemplary embodiment.
Figure 2 is a structure chart of a device for controlling multimedia illustrated according to an exemplary embodiment.

### DETAILED DESCRIPTION

The exemplary embodiments are illustrated in detail here, the examples of which are shown in the drawings. When the description below relates to the drawings, the same number in the different drawings represents the same or similar element unless otherwise expressed. The implementation ways described in the exemplary embodiments below do not represent all the implementation ways consistent with the present disclosure. On the contrary, the implementation ways are merely examples of the devices and methods consistent with some aspects of the present disclosure and described in detail in the attached claims.

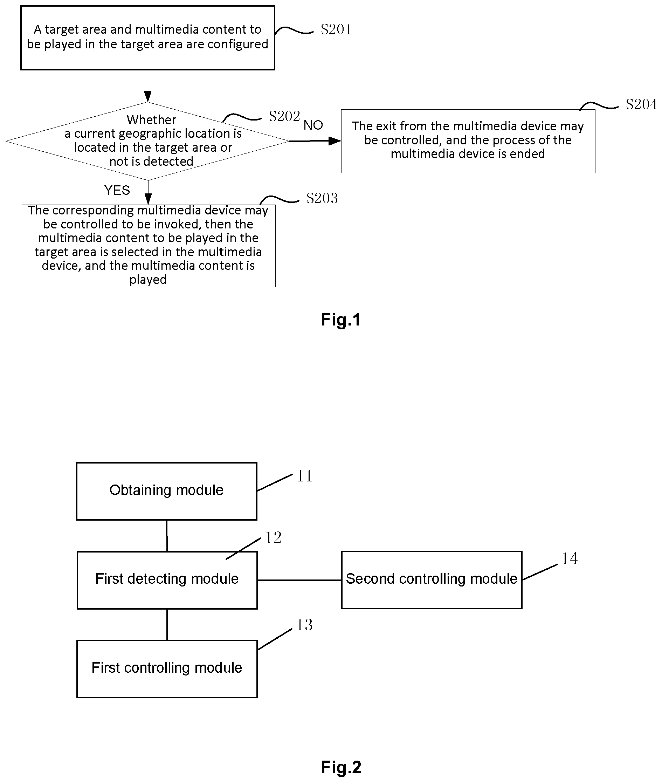

At present, a normal user watches multimedia content such as some videos and MVs etc. on a short journey between the company and home for each time or in the leisure time after going back home for each time. The normal user needs to stop watching the multimedia content when leaving the short journey between the company and home or leaving home. However, when needing to start or stop watching the multimedia content for each time, the user needs to manually turn on or turn off the corresponding multimedia applications. The manual operation process is very cumbersome and time-consuming, therefore, as shown in Figure 1, in an embodiment of the present disclosure, a method for controlling multimedia is provided and applied to terminals. The terminals may refer to mobile phones, tablet computers and vehicle-mounted terminals and so on. The method includes the following steps.

In the step S101, a target area and multimedia content to be played in the target area are configured.

In the embodiments of the present disclosure, the target area may be a path composed of a plurality of journeys, and may also be an area of a regular shape or an area of irregular shape and so on taking a geographic location as its center. The multimedia content may be regarded as video content and audio content etc.

Before the step S101, the user can set an access right in advance whether a GPS positioning module of the terminal may be permitted to be used during the video playing control process or not. Of course, in order to accurately determine the current geographic position of the user, the access right of the GPS positioning module needs to be opened. Moreover, the user may configure the location and the range of the area and the multimedia content to be played in the area etc. For example, the location of the area may be a home address, a frequently-visited coffee house address, or may be a longitude and a latitude of the home address and the longitude and the latitude of the coffee house address, and further may be places between home and the company where the user takes a taxi etc. The range can be determined by the WIFI signal range and the position error range etc. For example, the range can be set as 10m and so on when the home address is taken as its center, and the range of the places between home and the company where the user takes a taxi may be 3m etc. Then the location and the range of the area as well as the multimedia content configured by the user are stored in a predetermined storage space.

In the step S102, whether a current geographic location is located in the target area or not is detected.

Before the step S102, the current geographic location of the terminal can be detected by the GPS positioning module in the terminal.

In the step S102, the detected current geographic location may be compared with the location and range of the target area. When the current geographic location is located within the range of the target area, it may be determined that the current geographic location is located in the target area. For example, when the current geographic location is located within the range of 10m where the home address is taken as its center, it may be determined that the current geographic location is located in the target area. For another example, when the current geographic location is located within the range of 3m from the bus stop address near the company, or within the range of 3m from each point of the path between the bus stop near the company and home, or within the range of 3m from the bus stop address near the home address, it may be determined that the current geographic location is located in the target area.

A multimedia device is controlled to be turned on and the multimedia device is controlled to start playing the multimedia content in the step S103 when the current geographic location is located in the target area.

In an embodiment of the present disclosure, the multimedia device may refer to video playing application, music playing application, etc. in the terminal, and also may refer to video playing module, music playing module, etc. in the vehicle terminal.

In the step S103, the corresponding multimedia device may be controlled to be invoked, then the multimedia content to be played in the target area is selected in the multimedia device, and the multimedia content is played.

The multimedia device is controlled to be turned off in the step S104 when the current geographic location is located outside of the target area.

In the step S104, the exit from the multimedia device may be controlled, and the process of the multimedia device is ended.

Whether the current geographic location is located in the target area or not is detected by the present disclosure through configuring a target area and multimedia content to be played in the target area. The multimedia device can be controlled to be turned on and the multimedia device can be controlled to be started playing the multimedia content when the current geographic location is located in the target area, and the multimedia device can be controlled to be turned off when the current geographic location is located outside of the target area.

The method provided by the embodiment of the present disclosure can automatically start playing the multimedia content when the user reaches the target area, or automatically stop playing the multimedia content. It is simple and convenient to operate and use, and is capable of saving the time of the user, improving operational efficiency, and saving the energy.

In yet another embodiment of the present disclosure, the obtaining the target area in the step S101 includes the following steps.

In the step S201, a configured path is determined as the target area when the configured path configured by a user and containing at least one road segment is obtained.

In the step S201, since the user may configure a path from home to work unit, etc., this path typically includes at least one road segment which may refer to a transport line without junction nodes on the transport network, at this time, the whole road segment can be determined as the target area.

Or, in the step S202, a motion path configured by the user in an access application and containing at least one road segment is obtained, and the motion path is determined as the target area when the access application containing map information is accessed.

In the embodiment of the present disclosure, the access application containing map information may refer to map software, taxi-hailing app, etc., the access may refer to determining the motion path finally obtained by the access application as the target area.

In the step, the motion path obtained by the access application may be determined as the target area.

The configured path may be determined by the present disclosure as the target area when the configured path configured by the user and containing at least one road segment is obtained, or the motion path may be determined as a target area by obtaining the motion path configured by the user in an access application and containing at least one road segment when the access application containing map information is accessed.

The method provided by the embodiment of the present disclosure can automatically start playing the multimedia content when the user reaches the target area, or automatically stop playing the multimedia content, the playing of the multimedia content can be controlled only through presetting by the user. It is simple and convenient to operate, and is capable of saving the time of the user and saving the energy.

In the above embodiments, the configured path and the motion path contain at least one road segment therein, since the connection of every two road segments may be in the situations such as road, a junction of three roads, or crossroad, at this moment, if the user still watches the multimedia contents when walking, he will take risks and unnecessary loss. For this reason, in still another embodiment of the present disclosure, the method further includes the following steps.

In the step S301, whether the target area contains at least two road segments or not is judged.

In the embodiment of the present disclosure, since the user may pass a road segment or a plurality of road segments from one location to another location, in the step, the number of the road segments in the configured paths configured by the user may be calculated, or the number of the road segments in the motion path obtained by the access application may be calculated, and that whether the number of the road segments is more than two or not is judged.

In the step S302, whether a current geographic location is located within the preset range between any two road segments or not is detected when the target area contains at least two road segments.

In the embodiment of the present disclosure, the location between two road segments may be determined firstly, and then a preset range taking the location as its center is determined.

In the step S303, the multimedia device is controlled to pause the playing of the multimedia content when the current geographic location is located within the preset range between any two road segments.
when the target area contains at least two road segments, Whether the current geographic location is located within the preset range between any two road segments or not is detected in the present disclosure through judging whether the target area contains at least two road segments or not. The multimedia device may be controlled to pause the playing of the multimedia content when the current geographic location is located within the preset range between any two road segments.

With the method provided by the embodiment of the present disclosure, the user can pause the playing of the multimedia content when he moves from a segment of road to another segment of road without having to press the pause key in the screen manually. The method is simple and effective to operate, and avoids the occurrence of accidents such as car accidents caused by the distraction of the user due to watching multimedia content.

When the user configures a fixed geographic location, for example, home, frequently-visited coffee house etc., the user desires to automatically play the video when reaching this geographic location every time. For this purpose, in still another embodiment of the present disclosure, the method further includes the following steps. In the step S401, a radius threshold value corresponding to a geographic location is obtained when the geographic location information of any one of geographic locations configured by a user is obtained.

In the embodiment of the present disclosure, since WIFI hotspots all have a certain coverage, the radius threshold value herein may be a coverage of the WIFI hotspots, etc.

In the step S402, the target area is determined to be an area with the geographic location as its center and the radius threshold value as its radius.

When the geographic position information of any one of the geographic positions configured by the user is obtained, the target area is determined to be an area with the geographic location as its center and the radius threshold value as its radius in the present disclosure through obtaining the radius threshold value corresponding to the geographic position.

A target area for playing multimedia content can be automatically determined by the method provided by the embodiments of the present disclosure through taking a geographic location as its center and taking the radius threshold value as its radius, and it is simple in operation and user-friendly.

In yet another embodiment of the present disclosure, the step S102 includes the following steps.

In the step S501, whether the operating state of a positioning module is an on-state or not is judged.

In the embodiments of the present disclosure, since the current location of a terminal needs to be detected, the positioning module in the terminal needs to be turned on firstly.

In the step S502, when the operating state of the positioning module is the on-state, the current geographic location is obtained.

In the step S503, whether the current geographic location is located within a boundary range of the target area or not is judged.

In the step S504, when the current geographic location is located within the boundary range of the target area, it is determined that the current geographic location is located in the target area.

By judging whether the operating state of the positioning module is the on-state or not, the current geographic location is obtained when the operating state of the positioning module is the on-state. Whether the current geographic location is located within the boundary range of the target area or not is judged, and when the current geographic location is located within the boundary range of the target area, it can be determined that the current geographic location is located in the target area.

The method provided by the embodiment of the present disclosure can automatically determine whether the terminal is located in the target area or not, and it is simple in operation and user-friendly.

As shown in Figure 2, in yet another embodiment of the present disclosure, a device for controlling multimedia is provided, including: an obtaining module 11, a first detecting module 12, a first controlling module 13 and a second controlling module 14.

The obtaining module 11 is configured to configure a target area and multimedia content to be played in the target area.

The first detecting module 12 is configured to detect whether a current geographic location is located in the target area or not.

The first controlling module 13 is configured to control the multimedia device to be turned on and control the multimedia device to start playing the multimedia content when the current geographic location is located in the target area.

The second controlling module 14 is configured to control the multimedia device to be turned off when the current geographic location is located outside of the target area.

In yet another embodiment of the present disclosure, the obtaining module 11 includes: a first determining submodule or a second determining submodule.

The first determining submodule is configured to determine a configured path as the target area when the configured path configured by a user and containing at least one road segment is obtained.

Or, the second determining submodule is configured to obtain a motion path configured by the user in an access application and containing at least one road segment and determine the motion path as the target area when the access application containing map information is accessed.

In yet another embodiment of the present disclosure, the device further includes: a judging module, a second detecting module and a third controlling module.

The judging module is configured to judge whether the target area contains at least two road segments or not.

The second detecting module is configured to detect whether the current geographic location is located within a preset range between any two road segments or not when the target area contains at least two road segments.

The third controlling module is configured to control the multimedia device to pause the playing of the multimedia content when the current geographic location is located within the preset range between any two road segments.

In yet another embodiment of the present disclosure, the obtaining module 11 further includes: a first obtaining submodule and a third determining submodule.

The first obtaining submodule is configured to obtain a radius threshold value corresponding to the geographic location when the geographic location information about any one of the geographic locations configured by the user is obtained.

The third determining submodule is configured to determine the target area to be an area with the geographic location as its center and the radius threshold value as its radius.

In yet another embodiment of the present disclosure, the first detecting module includes: a first judging submodule, a second obtaining submodule, a second judging submodule and a fourth determining submodule.

The first judging submodule is configured to judge whether the operating state of the positioning module is an on-state or not.

The second obtaining submodule is configured to obtain the current geographic location when the operating state of the positioning module is the on-state.

The second judging submodule is configured to judge whether the current geographic location is located within the boundary range of the target area or not.

The fourth determining submodule is configured to determine that the current geographic location is located in the target area when the current geographic location is located within the boundary range of the target area.

In yet another embodiment of the present disclosure, a terminal is provided, including: the device for controlling multimedia described as any one of above embodiments of the device.

A computer storage medium is also provided in the embodiments of the present disclosure, wherein the computer storage medium can be stored with a program, and part or all steps in each implementation of the method for controlling multimedia provided by all above embodiments of the method can be implemented when the program is executed,.

Other embodiments of the present disclosure will be apparent to those skilled in the art from consideration of the specification and impletment of the disclosure disclosed herein. The application is intended to cover any variation, use or adaptation of the present disclosure which follow the general principle of the present disclosure and include common knowledge that is not disclosed in the present disclosure or customary technical means in the prior art. The specification and embodiments are construed to be exemplary only, while a true scope and spirit of the present disclosure are indicated by the following claims.

It is to be understood that the present disclosure is not limited to the precise structures described above and shown in the drawings, and that various changes and modifications may be made by those skilled in the art without departing from the scope of the present disclosure. The scope of the present disclosure is defined by the appended claims only.

## Claims

1. A method for controlling multimedia, comprising:
configuring a target area and multimedia content to be played in the target area;
detecting whether a current geographic location is located in the target area or not;
controlling a multimedia device to be turned on, and controlling a multimedia device to start playing the multimedia content when the current geographic location is located in the target area; and
controlling the multimedia device to be turned off when the current geographic location is located outside of the target area.

2. The method for controlling multimedia according to claim 1, wherein, the configuring the target area comprises:
determining a configured path as the target area when the configured path configured by a user and containing at least one road segment is obtained; or
obtaining a motion path configured by the user in an access application and containing at least one road segment, and determining the motion path as the target area when the access application containing map information is accessed.

3. The method for controlling multimedia according to claim 2, wherein, the method further comprises:
judging whether the target area contains at least two road segments or not;
detecting whether a current geographic location is located within a preset range between any two road segments or not when the target area contains at least two road segments; and
controlling the multimedia device to pause the playing of the multimedia content when the current geographic location is located within the preset range between any two road segments.

4. The method for controlling multimedia according to claim 1, wherein, the configuring the target area further comprises:
obtaining a radius threshold value corresponding to the geographic location when the geographic location information about any one of geographic location configured by the user is obtained; and
determining the target area to be an area with the geographic location as its center and the radius threshold value as its radius.

5. The method for controlling multimedia according to any one of claims 1 to 4, wherein, the detecting whether the current geographic location is located in the target area or not comprises:
judging whether the operating state of a positioning module is an on-state or not,
obtaining the current geographic location when the operating state of the positioning module is the on-state,
judging whether the current geographic location is located within a boundary range of the target area or not; and
determining the current geographic location is located in the target area when the current geographic location is located within the boundary range of the target area.

6. A device for controlling multimedia, comprising:
an obtaining module configured to configure a target area and multimedia content to be played in the target area;
a first detecting module configured to detect whether a current geographic location is located in the target area or not;
a first controlling module configured to control the multimedia device to be turned on, and control the multimedia device to start playing the multimedia content when the current geographic location is located in the target area; and
a second controlling module configured to control the multimedia device to be turned off when the current geographic location is located outside of the target area.

7. The device for controlling multimedia according to claim 6, wherein, the obtaining module comprises:
a first determining submodule configured to determine a configured path as the target area when the configured path configured by a user and containing at least one road segment is obtained; or
a second determining submodule configured to obtain a motion path configured by a user in an access application and containing at least one road segment, and determine the motion path as the target area when the access application containing map information is accessed.

8. The device for controlling multimedia according to claim 7, wherein, the device further comprises:
a judging module configured to judge whether the target area contains at least two road segments or not;
a second detecting module configured to detect whether the current geographic location is located within the preset range between any two road segments or not when the target area contains at least two road segments; and
a third controlling module configured to control the multimedia device to pause the playing of the multimedia content when the current geographic location is located within the preset range between any two road segments.

9. The device for controlling multimedia according to claim 6, wherein, the obtaining module further comprises:
a first obtaining submodule configured to obtain a radius threshold value corresponding to the geographic location when the geographic location information about any one of the geographic locations configured by a user is obtained; and
a third determining submodule configured to determine the target area to be an area with the geographic location as its center and the radius threshold value as its radius.

10. The device for controlling multimedia according to any one of claims 6 to 9, wherein, the first detecting module comprises:
a first judging submodule configured to judge whether the operating state of a positioning module is an on-state or not;
a second obtaining submodule configured to obtain the current geographic location when the operating state of the positioning module is the on-state;
a second judging submodule configured to judge whether the current geographic location is located within a boundary range of the target area or not; and
a fourth determining submodule configured to determine the current geographic location is located in the target area when the current geographic location is located within the boundary range of the target area.

11. A terminal, comprising: a device for controlling multimedia according to any one of claims 6 to 10.
